Europäisches Patentamt

European Patent Office

Office européen des brevets

(19)

(11) Publication number: **0 021 526**
**B1**

## (12) EUROPEAN PATENT SPECIFICATION

(45) Date of publication of patent specification: **26.02.86**

(21) Application number: **80200574.4**

(22) Date of filing: **16.06.80**

(51) Int. Cl.⁴: **A 61 G 1/06**

(54) Ambulance.

(30) Priority: **15.06.79 NL 7904702**

(43) Date of publication of application:
**07.01.81 Bulletin 81/01**

(45) Publication of the grant of the patent:
**26.02.86 Bulletin 86/09**

(84) Designated Contracting States:
**BE DE FR NL**

(56) References cited:
**DE-A-2 200 579**
**FR-A-1 389 999**
**FR-A-1 505 983**
**FR-A-1 546 964**
**GB-A- 857 799**
**US-A-1 864 454**
**US-A-4 078 269**

(73) Proprietor: **AUTOMOBIELBEDRIJF UNIHEF B.V.**
**Marsweg 55**
**NL-8013 PE Zwolle (NL)**

(72) Inventor: **Hogeveen, Gerrit Jan**
**Haarbeek**
**NL-8033 BH Zwolle (NL)**

(74) Representative: **van der Beek, George Frans, Ir.**
**et al**
**Nederlandsch Octrooibureau P.O. Box 29720**
**NL-2502 LS The Hague (NL)**

Courier Press, Leamington Spa, England.

## Description

The invention relates to an ambulance provided with a carrier for supporting a lying patient, said carrier having two rods which are supported by a spring system with respect to the ambulance, the spring system comprising at least two hydropneumatic spring elements having a liquid filled part and a part filled with a pressurized gas.

Such an ambulance is disclosed in US—A—1 864 454.

The resonant frequency of the wheel suspension spring system of ambulance ranges from 2.5 to 3 Hz. This frequency is too high for a person lying on the carrier. In the ideal case the frequency should be about 0.5 Hz. Usually it is not possible to adapt the spring system of the ambulance. By the application of the known spring system the frequency at which the carrier moves up and down may be reduced to a value between 0.5 Hz and 1 Hz. This however being accompanied by an insufficient damping of the spring action so that a person lying on the carrier experiences a heaving motion that may lead to sickness.

The object of the invention is to avoid this drawback and to this end the ambulance indicated in the preamble is characterized in that the carrier is a stretcher carrier; the liquid filled part is connected to a pump and is separated from the part filled with a pressurized gas by a membrane; each of said rods is connected to a lever and each of the levers is connected to the liquid filled part of the respective spring element by means of a connecting rod bearing a piston at the end thereof; and the damping element is accommodated in the liquid filled part of each one of said spring elements, said damping element being operable in two flowing directions.

In applying the invention the frequency of the movement of the carrier may be reduced to a value between 0.5 Hz and 1 Hz while the spring motion can be damped sufficiently.

US patent specification 4 078 269 discloses a hydropneumatic system for supporting a litter frame, said system including a unit having a diaphragm separating a pneumatic medium from a hydraulic medium. Further the system includes an adjustable choke connected in parallel with a check valve blocking a return flow and only allowing the return flow by way of the choke. It should be noted that the choke does not have the function of damping the spring motion. In fact, the known system is just able to take up choke or impact loads and not to damp the amplitude of the undulation.

Further GB—A—857 799 discloses a suspension system for automobiles absorbing the high-amplitude oscillations. Each wheel is attached to a frame by a swinging arm connected to a suspension cylinder and a hydraulic pneumatic unit. Any fluid tending to flow towards the unit is retarded by a compression damping device operating only in the direction from the cylinder to the unit, whereas any fluid tending to flow from the unit is retarded by the expansion damping device operating only in the direction from the unit to the cylinder. Further two suspension cylinders of the same car axle are interconnected by a pipe line having inserted therein a damping device adapted to retard the flow of fluid in either direction. An ambulance could have wheel suspension systems according to this publication. However, the frequency with which the car body oscillates is too high for a person or a carrier and it is not possible to adapt the suspension system of the car to get a lower oscillation frequency and at the same time getting a sufficient damping of the spring action.

In order to accommodate the spring system at the side of the carrier within a side box of the ambulance and not underneath the carrier, the levers are mounted at an end of the rods.

The system according to the invention offers the possibility to move the carrier up and down as a whole or at one of the two rods separately.

In case of a difference in pivoting between the levers it will be required that one of the rods is operable to be shifted over a short distance with respect to the other rod.

In an appropriate embodiment the levers are L-shaped while one of the arms of said levers is connected to the connecting rod by means of a ball and socket joint.

The system according to the invention offers two possibilities to disengage the spring movement, that is by increasing the oil pressure to so high a value that the membrane comes to rest against the wall of the spring element or by completely dismissing the oil pressure. The non-spring supported position is required when applying a heart massage.

The invention will now be elucidated further with reference to the drawings in which

Figure 1 represents a diagrammatic view of the spring system to be used in an ambulance according to the invention;

Figure 2 shows a cross section on an enlarged scale of a spring element to be employed in said system, and

Figure 3 shows a side elevation of the damping element forming part of a spring element.

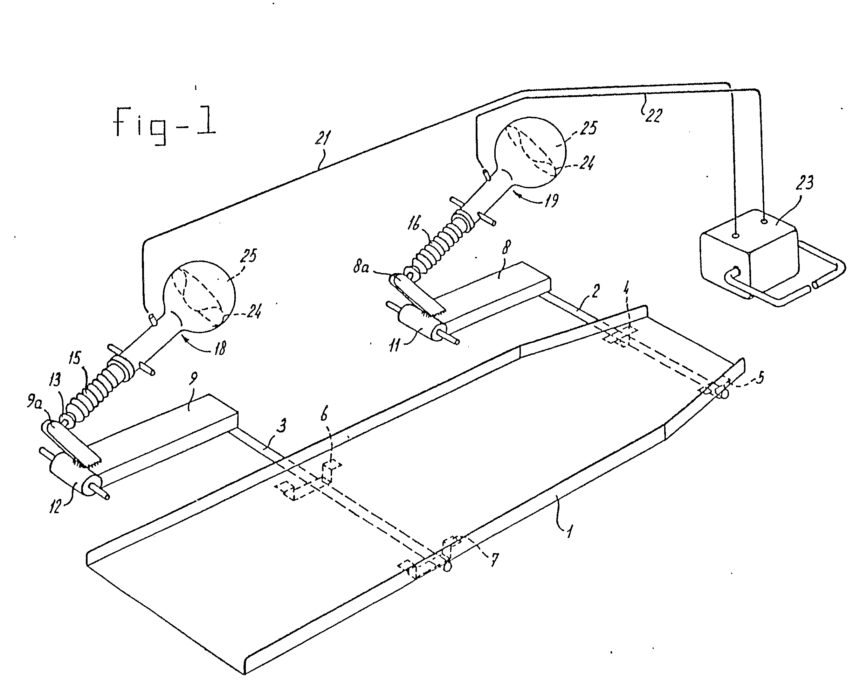

In figure 1 there is shown an inserting plate 1 for a stretcher carrier to be mounted in an ambulance. This plate serving as a carrier 1 is supported by two rods 2 and 3. The rod 2 is connected to the carrier 1 by means of two hinge joints 4, 5. The connection between the rod 3 and the carrier 1 is formed by two straps 6, 7 within which the rod 3 is permitted to slide somewhat and also to pivot.

At the one end thereof the rods 2 and 3 are connected to an substantially L-shaped lever 8 and 9, said lever being connected to the carriage work of the ambulance by means of a hinge joint 11 or 12 respectively.

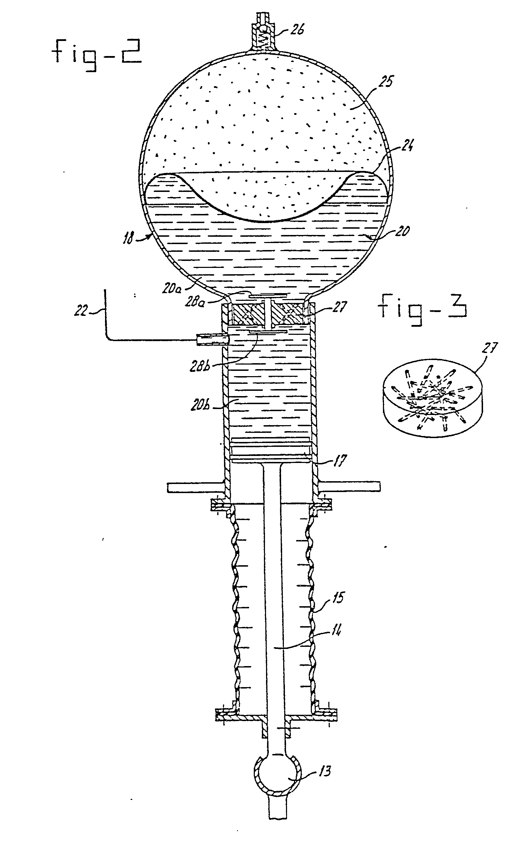

The arms 8a and 9a of the levers 8 and 9 are fastened to a connecting rod 14 by means of a ball and a socket joint 13 (see figure 2), said connecting rod being covered by a rubbery protecting bellows 15, 16.

As will apparent from figure 2 there is mounted a piston 17 at the end of each connecting rod 14 which piston is slidably inserted in the cylindrical part of a hydropneumatic spring element 18 or 19.

Each one of said elements 18, 19 comprises an oil filled part 20 which part is connected by means of a line 21 or 22, respectively to a foot pump 23 having incorporated therein an excess pressure valve which part on the other hand is separated by means of a membrane 24 from a part 25, said latter part being filled with nitrogen at a pressure of about 8 atmospheres through a valve 26.

Within the oil filled part 20 there is accommodated a damping body 27 constituting a separation between the two parts 20a and 20b.

The damping body 27 consists of a disc (vide figure 3) in which there are provided two sets of obliquely extending bores. Spaced at a short distance from the two surfaces of the disc there are provided elastic plates 28a, 28b. The first set of bores extends from the lower surface of the disc beyond the reach of the lower plate 28b to the upper surface of the disc just below the upper plate 28a. The other set of bores extend from the other surface of the disc 27 beyond the reach of the upper plate 28a to the bottom surface of the disc just above the lower plate 28b.

The foot pump 23 is provided with two pedals one for operating the spring element 18 and the other for operating the spring element 19.

The operation of the above described system is as follows:

Upon inserting a carrier including a person lying thereon on the plate 1 the pedals of the foot pump 23 are operated for supplying oil to the elements 18 and 19.

The weight of the person and of the inserting plate 1 will cause a pressure on the piston 17 directed towards the membrane. As long as the oil pressure within the room 20 of the spring element 18 or 19 is lower than this external pressure the membrane 24 will be displaced into the direction away from the piston 17 upon decreasing the oil pressure whereby the gas pressure in the part 25 will increase. As soon as the oil pressure in the room 20 exceeds the external pressure the piston 17 will be pushed outward, whereby the lever will commence to pivot and the corresponding rod 2, 3 will commence to move upwards. When both the rods 2 and 3 have reached about the intermediate part of their maximum strokes the operator will stop pumping. The spring system is then ready for a ride with the ambulance.

In case the ambulance hits a hole the hinges 11, 12 will move downwards together with the carriage work, while the pistons 17 will move away from the corresponding membranes 24, whereby the oil rooms will increase and the gas pressure in the parts 25 will decrease. The inserting plate will follow this downward movement of the carriage with some retardation whereby the pistons 17 will be pushed back again and the gas pressure will increase. This will lead to the springy effect. The damping of the spring motion is caused by the damping bodies 27, 28a, 28b. The oil flowing from the one oil filled room 20a (or 20b) to the other oil filled room 20b (or 20a) will loose part of its kinetic energy when impacting an elastic plate 28b (or 28a). This part of kinetic energy is converted into heat.

There is achieved the considerably advantage that the spring system may be adapted to the weight of the person lying on the stretcher. Moreover upon sufficient damping there is likewise assured a spring frequency of about 0.5 Hz. Even upon braking there is achieved a good spring and damping action while the center of gravity situated between the rods 2 and 3 will then move forwards. The front lever 8 will be loaded additionally whereas the load on the back lever 9 will be decreased somewhat. Such movements are accommodated resiliently by the elements 18 and 19 while swinging motions are damped.

Upon acceleration there happens of course the reverse with respect of braking i.e. the center of gravity of the person will move backwards and the element 18 will additionally be loaded by means of the rods 3, the lever 9 and the connecting rod 14, whereas the element 19 will be somewhat relieved.

In order to permit differences in the hinge movements of the levers 8 and 9 the rod 3 is permitted to slide on the straps 6 and 7.

By making the oil pressure in one hydropneumatic spring element higher than that in the other one the carrier 1 may be placed in any arbitrary oblique position, i.e. slanting forwards or slanting backwards (Trendelenburg position and anti-Trendelenburg position).

For carrying out a heart massage it is desired to nullify the spring action of the hydropneumatic elements 18, 19. This may be achieved in two ways: either by increasing the oil pressure so much (for instance to 80 atmospheres) that the membrane will come to rest against the wall of the corresponding hydropneumatic spring element, or by entirely releasing the oil pressure (by raising the pedals of the pump) whereby the piston will abut against a stop in the farmost retracted position.

The elements 18, 19, the levers 8, 9, the lines 21, 22 and the pump 23 may be accommodated within a side box of the ambulance at the side of the carrier plate 1. Thus the normally available room in the ambulance will not be decreased by the application of the invention.

Within the scope of the main claim several modifications are possible.

## Claims

1. An ambulance with a carrier (1) for supporting a lying patient, said carrier having two rods (2, 3) which are supported by a spring system with respect to the ambulance, the spring system comprising at least two hydropneumatic spring elements (18, 19) having a liquid filled part (20) and a part (25) filled with a pressurized gas, characterized in that the carrier is a stretcher carrier (1); the liquid filled part (20) is connected to a pump (23) and is separated from the part (25) filled with a pressurized gas by a membrane (24); each of said rods (2, 3) is connected to a lever (8, 9) and each of the levers is connected to the liquid filled part of the respective spring element (18, 19) by means of a connecting rod (14) bearing a piston (17) at the end thereof; and a damping element (27, 28a, 28b) is accommodated in the liquid filled part of each one of said spring elements, said damping element being operable in two flowing directions.

2. An ambulance according to claim 1, characterized in that the levers (8, 9) are mounted at an end of the rods (2, 3).

3. An ambulance according to claim 1 or 2, characterized in that one (3) of said rods can be shifted over a short distance with respect to the other rod (2).

4. An ambulance according to any one of the preceding claims, characterized in that said levers (8, 9) are L-shaped, one of the arms of said levers being connected to the connecting rod (14) by means of a ball and socket joint (13).

**Revendications**

1. Voiture ambulance munie d'un support (1) destiné à porter un patient couché, ce support comportant deux tiges (2, 3) qui sont supportées relativement à la voiture ambulance par un système de ressort, le système de ressort comprenant au moins deux éléments de ressort (18, 19) hydropneumatiques qui comportent une partie (20) remplie de liquide et une partie (25) remplie de gaz sous pression, caractérisée en ce que le support est une civière (1); la partie (20) remplie de liquide est reliée à une pompe (23) et séparée par une membrane (24) de la partie (25) remplie de gaz sous pression; chacune desdites tiges (2, 3) est reliée à un levier (8, 9) et chacun des leviers est relié, au moyen d'une tige de connexion (14) qui porte en son extrémité un piston (17), à la partie (20) remplie de liquide de l'élément de ressort (18, 19) respectif; et un élément amortisseur (27, 28a, 28b) est disposé dans la partie (20) remplie de liquide de chacun desdits éléments de ressort, cet élément amortisseur étant actionnable dans deux directions d'écoulement.

2. Voiture ambulance selon la revendication 1, caractérisée en ce que les leviers (8, 9) sont montés à une extrémité des tiges (2, 3).

3. Voiture ambulance selon la revendication 2 ou 3, caractérisée en ce que l'une (3) desdites tiges peut être déplacée relativement à l'autre tige (2) sur une courte distance.

4. Voiture ambulance selon d'une des revendications précédentes, caractérisée en ce que lesdits leviers (8, 9) sont en forme de L, l'un des bras desdits leviers étant relié à la tige de connexion (14) au moyen d'une articulation (13) à boule et cupule.

**Patentansprüche**

1. Krankenwagen mit einem Träger (1) zum Abstützen eines liegenden Patienten, wobei der Träger zwei Stangen (2, 3) aufweist, die in bezug auf den Krankenwagen auf ein Federungssystem abgestützt sind, wobei das Federungssystem mindestens zwei hydropneumatische Federelemente (18, 19) umfasst, die einen mit einer Flüssigkeit gefüllten Teil (20) und einen mit unter Druck stehenden Gas gefüllten Teil (25) aufweisen, dadurch gekennzeichnet, dass der Träger eine Bahre (1) ist; der mit einer Flüssigkeit gefüllte Teil (20) mit einer Pumpe verbunden (23) und von dem mit unter Druck stehenden Gas gefüllten Teil (25) durch eine Membran (24) getrennt ist; jede der Stangen (2, 3) mit einem Hebel (8, 9) verbunden ist und jeder der Hebel mit dem mit einer Flüssigkeit gefüllten Teil (20) des betreffenden Federelements (18, 19) durch eine an ihrem Ende einen Kolben (17) tragende Verbindungsstange (14) verbunden ist; und im mit einer Flüssigkeit gefüllten Teil jedes der genannten Federelemente ein Dämpfungselement (27, 28a, 28b) angeordnet ist, wobei dieses Dämpfungselement in zwei Flussrichtungen wirksam ist.

2. Krankenwagen nach Anspruch 1, dadurch gekennzeichnet, dass die Hebel (8, 9) an einem Ende der Stangen (2, 3) angebracht sind.

3. Krankenwagen nach Anspruch 1 oder 2, dadurch gekennzeichnet, dass eine (3) der genannten Stangen in bezug auf die andere Stange (2) über eine kurze Distanz verschoben werden kann.

4. Krankenwagen nach einem der vorangehenden Ansprüche, dadurch gekennzeichnet, dass die genannten Hebel (8, 9) L-förmig ausgebildet sind, wobei einer der Arme der genannten Hebel mit der Verbindungsstange (14) über ein Kugel- und Pfannengelenk (13) verbunden ist.

Fig-1

0 021 526

fig-2

fig-3